# EUROPEAN PATENT APPLICATION

(11) **EP 4 318 827 A1**
(43) Date of publication of application: **07.02.2024**
(21) Application number: 23187635.0
(22) Date of filing: 25.07.2023
(51) Int. Cl.: H01S 3/00

(54) **PULSED LASER SYSTEM WITH OPTICAL ENHANCEMENT RESONATOR**

(30) Priority: 02.08.2022 US 202263394560 P
(71) Applicant: Thorlabs, Inc., Newton, NJ 07860 (US)
(72) Inventor: Backus, Sterling, 80516 Erie (US); Domingue, Scott, 80504 Longmont (US); Kirchner, Matthew, 80020 Westminster (US)
(74) Representative: Grättinger Möhring von Poschinger Patentanwälte Partnerschaft mbB

(57) **Abstract**

A system and method of producing energetic laser pulses suitable for multi-photon microscopy, in which laser pulses from an ultrafast pump source operating at greater than 40 MHz repetition rate are directed onto an optical cavity, where the pulses build-up to a higher energy inside of that cavity over the period of many pulses. After the intra-cavity pulses achieve sufficient energy, an active element inside of the cavity switches out the enhanced light pulse with a reduced a repetition rate relative to the pump source. The increased pulse energy and reduced repetition rate will enable the pump source, originally designed for two-photon microscopy, to perform new imaging modalities, such as deep, *in-vivo,* three-photon microscopy.

## Description

### CROSS REFERENCE TO RELATED APPLICATIONS

This application claims the benefit of U.S. Provisional Patent Application No. 63/394,560 filed on August 2, 2022. The disclosure of U.S. Provisional Patent Application No. 63/394,560 is hereby incorporated by reference.

### TECHNICAL FIELD

The present disclosure generally relates to microscopy devices, and more particularly to systems and methods of producing energetic laser pulses suitable for multi-photon microscopy.

### BACKGROUND

In the life sciences, fluorescence microscopy is used to study biological samples like individual cells or complex structures like the brain. Scattering in these samples limits the imaging depth. It is generally true that light with longer wavelength is scattered less in tissue hence allowing it to penetrate deeper into e.g., the brain. Two-photon microscopy makes use of this and allows imaging about 1 mm deep into e.g., the brain. In two-photon microscopy, the wavelength needed to excite a fluorophore or fluorescent protein is doubled compared to single photon excitation as e.g., used in confocal microscopy. Three-photon microcopy microscopy takes this approach one step further by using even longer wavelength light. The downside of going from single to two- to three-photon excitation is that the probability of such an event happening becomes less and less likely and hence requires higher laser intensity. For three-photon microcopy, µJ laser pulses producing Megawatt of peak power are required. Systems capable of producing these peak power levels are expensive and operate with low repetition rates.

The basic problem statement is that light sources for deep (over 0.75 mm depth), in-vivo, multi-photon imaging typically cost over $250k. Scientists interested in deep tissue imaging have already invested substantial dollar resources into an ultrafast laser and two-photon microscope, costing $200-500k. The high cost keeps many interested researchers from adopting new deeper tissue imaging modalities to supplement their current capabilities.

Virtually all of the commercially available light sources for three-photon microscopy utilize high power, low repetition rate, µJ-class femtosecond lasers paired with optical parametric amplifiers (OPA). The complexity of the drive laser and the widely tunable wavelength conversion module create a high cost of entry for gaining access to the imaging modality. The result is a slow adoption rate among neuroscientists.

By contrast, two-photon microscopy has become a standard imaging tool in neuroscience. Along with that imaging methodology, many sophisticated high-repetition rate femtosecond laser sources have been purchased to drive those microscopes.

Most scientists, however, need, besides the three-photon imaging capability, the ability to do two-photon imaging in order to acquire images at a high frame rate to capture dynamic processes. Three-photon capability is only needed when they need to go deep into the sample. A two-photon laser is a workhorse in most neuroscience lab.

Therefore, there is a long-felt need for a technical solution that utilizes the high repetition rate low-energy sources many scientists already own to synthesize the low-repetition rate, high-energy pulses needed for deep tissue, multi-photon, in particular, three-photon imaging modalities.

### SUMMARY

The purpose of the present disclosure is to convert pulses from high-repetition-rate, low-energy ultrafast laser sources into low-repetition-rate high-energy laser pulses for use in high scattering multi-photon microscopy, such as deep tissue three-photon microscopy. As an example, consider a commercial optical parametric oscillator (OPO) operating at 1300 nm, repetition rate of 80 MHz, and 1.5 W of power (18.75 nJ of energy per pulse). An embodiment of the present disclosure provides an enhancement cavity to build up the pulse energy from less than 20 nJ to greater 1000 nJ, and then "dumping" the enhanced pulse to the microscope at a repetition rate of less than 10 MHz, and preferably about 1 MHz. In this example, the more energetic dumped pulse at the reduced repetition satisfies the pulse energy and average power requirements are matched to the needs of in-vivo three-photon microscopy at imaging depths beyond 0.75 mm. This disclosure also leverages the large installed base of such OPO like sources (hundreds are already in the field) and would provide an in-line upgrade to add three-photon microscopy capability to an existing microscope-laser pair. The proposed embodiment would be significantly cheaper than buying an additional laser dedicated to three-photon microscopies.

An embodiment of the present disclosure provides a high finesse (> 300) stable or unstable optical cavity comprising a partial reflector, and/or multiple high reflectivity mirrors, and an acousto-optic modulator (AOM), or electro-optic modulator (EOM), for the purpose of coherently stacking ultrafast pulses to greater than 10 times input pulse amplitude and energy; and switching stacked pulses outside of said cavity.

An embodiment of the present disclosure provides a system for producing light pulses, including: a femtosecond laser configured to generate femtosecond duration pulses with a repetition rate greater than 40 MHz; a pulse stretcher configured to increase the femtosecond duration pulses to picosecond duration pulses; an optical cavity configured to receive the pulses from the pulse stretcher and coherently stack the pulses within the optical cavity to increase a pulse amplitude; an active coupling element configured to out couple pulses from inside of the optical cavity to outside of the optical cavity at a fraction of the repetition rate; and a compressor configured to reduce the pulse duration of the out coupled pulses to femtosecond duration pulses..

### BRIEF DESCRIPTION OF THE DRAWINGS

FIG. 1 illustrates a schematic diagram of a system for increasing the pulse energy and decreasing the repetition rate of the output of a femtosecond laser according to an embodiment.
FIG. 2 is an example enhancement cavity according to an embodiment.

### DETAILED DESCRIPTION

The description of illustrative embodiments according to principles of the present disclosure is intended to be read in connection with the accompanying drawings, which are to be considered part of the entire written description. In the description of embodiments of the disclosure herein, any reference to direction or orientation is merely intended for convenience of description and is not intended in any way to limit the scope of the present disclosure. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the disclosure are illustrated by reference to the exemplified embodiments. Accordingly, the disclosure expressly should not be limited to such exemplary embodiments illustrating some possible nonlimiting combination of features that may exist alone or in other combinations of features; the scope of the disclosure being defined by the claims appended hereto.

This disclosure describes the best mode or modes of practicing the disclosure as presently contemplated. This description is not intended to be understood in a limiting sense, but provides an example presented solely for illustrative purposes by reference to the accompanying drawings to advise one of ordinary skill in the art of the advantages and construction of the certain embodiments. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

An embodiment of the present disclosure resembles the method of ultrafast cavity "stacking" (or cavity enhancement) that has been previously used to create very strong intracavity intensities for the purposes of generating higher harmonics in the vacuum ultraviolet (VUV) or extreme ultraviolet (XUV). Inside a cavity, pulses add together, building up energy and average power. When these "enhanced" pulses are focused inside the cavity, peak intensities of over 1×10¹⁴ W/cm² can be achieved, giving multi-photon ionizing radiation.

Cavity stacking along with cavity dumping has also been used to boost the energy of oscillator pulses (at a lower repetition rate) as a supplement to or a replacement for a laser crystal/fiber based amplifier. Ti:sapphire lasers sold by several companies in the past have sometimes included an intracavity AOM along with a reduced output coupling, which allows energetic pulses to build up in the cavity, which are then dumped out at several kHz repetition rates. Similar to this approach, a standard Ti:sapphire oscillator has been directed into an enhancement cavity, where energetic pulses were dumped at lower repetition rates.

An embodiment of the present disclosure utilizes the techniques that were developed before (cavity enhancement/stacking plus cavity dumping) in a unique wavelength range for the purposes of generating a source specifically suited for three-photon microscopy in the approximately 1300 nm minimum scatter, and absorption window of common biological tissues, e.g., the brain. The technique used here can also be used to enhance other wavelengths of interest, with changes to the cavity mirrors and stretcher/compressor system.

In a system according to one embodiment, the system components include:
1. Ultrafast oscillator outputting pulses in the 1250-1350 nm range at a repetition rate of greater than 40 MHz with a bandwidth supporting sub-200 femtosecond pulses.
2. A stretcher element that increases the temporal duration of the ultrafast pulses from femtosecond to picosecond durations for the purpose of minimizing the nonlinear effects inside the enhancement cavity.
3. A locking system that keeps the enhancement cavity at the same repetition rate as the input ultrafast laser via feedback to an intra-cavity actuator.
4. A cavity with high reflectivity mirrors and an input/output coupling element for building up the light.
5. An intra-cavity dumping element that sends the light out of the cavity when the pulses have reached a high enough energy.
6. A compressor element that shortens the temporal duration of the pulse back to near the fundamental limited pulse duration (sub-200 fs).

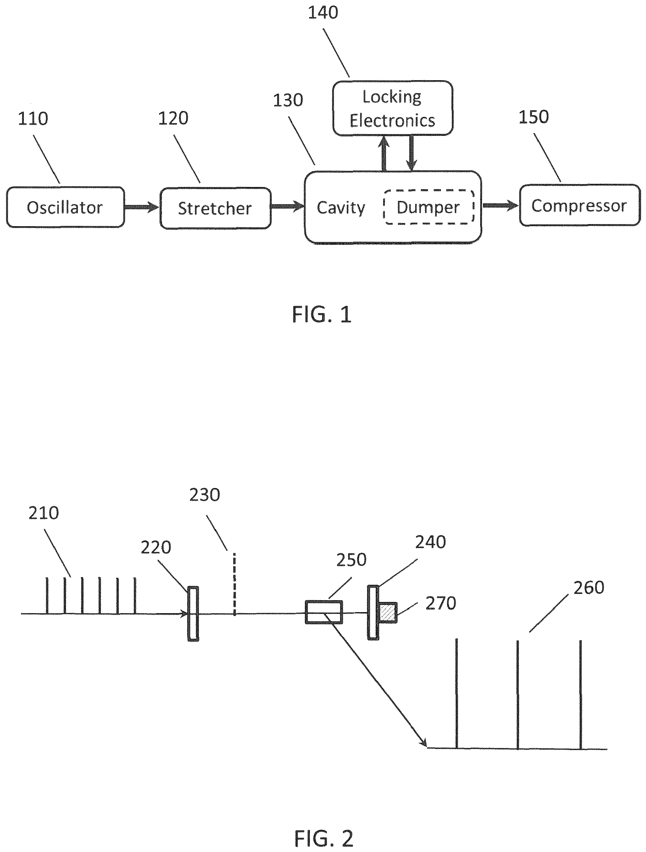

FIG. 1 illustrates a schematic diagram of a system for increasing the pulse energy and decreasing the repetition rate of the output of an existing femtosecond laser according to an embodiment. The oscillator 110 outputs pulse to a stretcher element 120, the stretcher element 120 increases the temporal duration of the ultrafast pulses from femtosecond to picosecond durations. The cavity 130 builds up the pulse energy with the locking electronics 150 keeping the same repetition rate of the input pulses, and the compressor 140 shortens the temporal duration of the pulses back to femtosecond pulses.

FIG. 2 shows an enhancement cavity according to an embodiment. An input pulse train 210 enters the cavity through a partial reflector 220. The input pulses are reflected between the partial reflector 220 and one or more highly reflective mirrors 240. Inside the cavity, a pulse 230 with larger amplitude is built up by coherently stacking the input pulses 210 entering the cavity. When the stacked pulse reaches a desired power level, an active coupling element (dumper) 250 switches the stacked pulse out of the cavity, and this results in a pulse train 260 having larger amplitude and lower repetition rate than the input pulse train 210. The actuator 270 adjusts the position of the one or more mirror 240 based on a feedback control signal from the locking electronic 140 shown in FIG. 1. In another embodiment, the light pulses 210 are switched into the cavity by an active or passive coupling element, and in this case the first mirror 220 is a highly reflective mirror. In another embodiment, the light pulses 210 are switched into the cavity by the same active coupling element 250, and the active element is configured to switch in pulses 210 and switch out pulses 260 at their respective repetition rates.

Note that for simplicity, the setup shown in FIG. 2 is just an illustrative example configuration where one first mirror 220 and one second mirror 240 are arranged to form the cavity. It is understood that different numbers of mirrors are needed and the mirrors are arrange in different configurations depending on specific design requirements, e.g., cavity length, and space requirements. For example, an arrangement with one or more fold mirrors may be used to increase the cavity length within an overall device size limitation.

In some embodiments, other elements could be added such as optics for input mode matching to the cavity, optics for output mode-matching to the application needs, or specific optics and electronics for the locking system, such as Pound-Drever-Hall (PDH) or Hansch-Couillaud (HC) locking elements.

In view of the foregoing one or more embodiments, an ultrafast laser system designed for two-photon microscopy can be adapted for three-photon microscopy. The system works by taking the pulses from an ultrafast oscillator that outputs light in the correct spectral region, temporally stretching them in time, directing them to the input/output coupler of an optical cavity, locking the cavity so that the pulses inside the cavity coherently stack up to a higher pulse energy, dumping the pulses out of the cavity with an intracavity element such as an AOM or Pockels cell, then recompressing the pulses to be suitable for three-photon microscopy. Thus, an embodiment of the present disclosure satisfies the long-felt need for a more economical way to perform three-photon microscopy by adapting a lower cost two-photon microscopy system to extend its spectral capabilities to the three-photon microscopy regime. A unique advantage of an embodiment of the present disclosure is that it provides a device which can be used in conjunction with a ubiquitous two-photon light source to produce light pulses in the µJ regime. There is no need to buy an additional laser dedicated to three-photon microscopies. It provides an inexpensive adaptation to expand the utility and capability of an existing two-photon microscopy system to cover three-photon microscopy.

While the present disclosure describes at some length and with some particularity with respect to the several described embodiments, it is not intended that it should be limited to any such particulars or embodiments or any particular embodiment, but it is to be construed so as to provide the broadest possible interpretation in view of the related art and, therefore, to effectively encompass various embodiments herein. Furthermore, the foregoing describes various embodiments foreseen by the inventor for which an enabling description was available, notwithstanding that modifications of the disclosure, not presently foreseen, may nonetheless represent equivalents thereto.

## Claims

1. A system for producing light pulses, comprising:
a femtosecond laser (110) configured to generate femtosecond duration pulses with a repetition rate greater than 40 MHz;
a pulse stretcher (120) configured to increase the femtosecond duration pulses to picosecond duration pulses;
an optical cavity (130) configured to receive the pulses from the pulse stretcher (120) and coherently stack the pulses within the optical cavity to increase a pulse amplitude;
an active coupling element (250) configured to out couple pulses from inside of the optical cavity to outside of the optical cavity at a fraction of the repetition rate; and
a compressor (150) configured to reduce the pulse duration of the out coupled pulses to femtosecond duration pulses.

2. The system of claim 1, wherein the femtosecond laser is an optical parametric oscillator (OPO).

3. The system of claim 1, wherein the optical cavity is configured with a maximum pulse energy build-up between a factor of 10 and 1000 times the input pulse energy.

4. The system of claim 1, wherein the optical cavity is configured to have a finesse of more than 300.

5. The system of claim 1, wherein the system is configured to output pulses with power greater than 100 nJ.

6. The system of claim 1, wherein the system is configured to provide a wavelength capability to cover a range of 200 nm - 20 µm.

7. The system of claim 1, wherein the optical cavity comprises a partial reflector (220) and one or more mirrors (240), and the optical cavity is configured to receive input pulses through the partial reflector (220).

8. The system of claim 1, wherein the optical cavity comprises a plurality of mirrors (220, 240), and the input pulses are switched into the optical cavity by the active coupling element (250).

9. The system of claim 1, further comprising a locking system (140) configured to keep the pulses in the optical cavity at the same repetition rate as the input pulses via a feedback loop for controlling an intra-cavity actuator (270).

10. The system of claim 1, wherein the optical cavity is configured to support multiple wavelength operations simultaneously.

11. The system of claim 1, wherein the optical cavity comprises an optical fiber based, or free space component.

12. The system of claim 1, wherein the optical cavity comprises a polarization element.

13. The system of claim 1, wherein the optical cavity comprises a non-linear element.

14. The system of claim 1, wherein the optical cavity includes a wavelength dispersion element either spatially or temporally.

15. The system of claim 1, wherein the active coupling element (250) comprises one of the following elements: acousto-optic modulator (AOM), electro-optic modulation (EOM), Pockels cell.

16. The system of claim 1, wherein the optical cavity is configured to use an acousto-optic modulator (AOM) as a non-linear element.

17. The system of claim 1, wherein the compressor is configurable to provide an adjustable pulse chirp for use with a dispersive optical system.

18. The system of claim 1, wherein the active coupling element is configured to out couple pulses at a repetition rate of about 1 MHz.

19. The system of claim 1, wherein the system is configured to produce light pulses for three-photon excitations.
